Europäisches Patentamt

(19) European Patent Office

Office européen des brevets

(11) Publication number: **0 129 930**
**A1**

## (12) EUROPEAN PATENT APPLICATION

(21) Application number: 84200865.8

(22) Date of filing: 14.06.84

(51) Int. Cl.⁴: **A 47 J 31/40**

(30) Priority: 21.06.83 IT 6768883

(43) Date of publication of application:
02.01.85 Bulletin 85/1

(84) Designated Contracting States:
AT CH DE FR LI

(71) Applicant: O.D.A. di Faccinti & C. S.a.S.
Via Rosa di Luxembourg, 12-14
I-10093 Collegno (Torino)(IT)

(72) Inventor: Faccinti, Alfredo
Via Colla, 44
I-10098 - Rivoli (Torino)(IT)

(74) Representative: Lotti, Giorgio
c/o Ing. Barzanò & Zanardo Milano S.p.A. Via Cernaia 20
I-10122 Torino(IT)

(54) Automatic distributor for preparing and dispensing beverages formed by infusions of powdered foodstuffs.

(57) An automatic distributor for preparing and dispensing beverages formed by infusions of powdered foodstuffs, comprises a chamber (12) into which the proportioned powder and the hot water for the infusion are introduced; two opposed pistons (17,18) are slidable within said chamber (12) in such a manner that the first of them performs a first translation towards the second piston, maintained stationary, so as to be pressed against the powdered foodstuff; at the end of this stroke, hot water is supplied, through an electric valve (15), into the chamber containing the powder, and the infusion is supplied to a nozzle (41) formed in the second piston; thereafter, the second piston is moved away from the first piston (18) and made to come out from the chamber, and, by continuing the stroke of the first piston, the compacted powder is ejected through the opening which has thus been left free.

Fig.1

DESCRIPTION

The invention relates to an automatic distributor for preparing and dispensing beverages formed by infusions of powdered foodstuffs, such as coffee.

The main object of the invention is to provide a distributor of the type mentioned hereinabove, which, instead of operating vertically or rotationally, as is the case of the distributors used at present time, operates in a horizontal direction. This involvs numerous advantages, first of which consits in having at one's disposal a compact machine of limited overall dimension, particularly useful in the field of the small table-distributors.

Another object of the invention is to provide a distributor of extremely simple conception as compared with the distributors used presently which are particularly complex and therefore require continuous maintenance.

For attaining these and other objects which will be better understood later, the present invention proposes to provide an automatic distributor for preparing and dispensing beverages formed by infusions of powdered foodstuffs, characterized in comprising a chamber provided with respective openings for feeding the powdered product and the hot infusion water; in the chamber there being slidably arranged two opposed pistons, one of which accomplishes a first section of stroke towards the other piston, maitained stationary, and a second section of stroke to eject the compressed powder through an opening of the chamber, which

- 2 -

0129930

is set free by moving the other piston away from the first;

there being provided feeding means of introducing the hot water into the chamber at the end of the first section of the stroke of the first piston, discharge conduits for discharging the infusion produced by the passage of the water into the powder, and kinematic means actuated by motor means which produce said translations of the two pistons.

A preferred, but not limiting embodiment of the distributor according to the invention will now be described with reference to the annexed drawings, in which:

Figure 1 is a longitudinal section of the distributor according to the invention in the rest position;

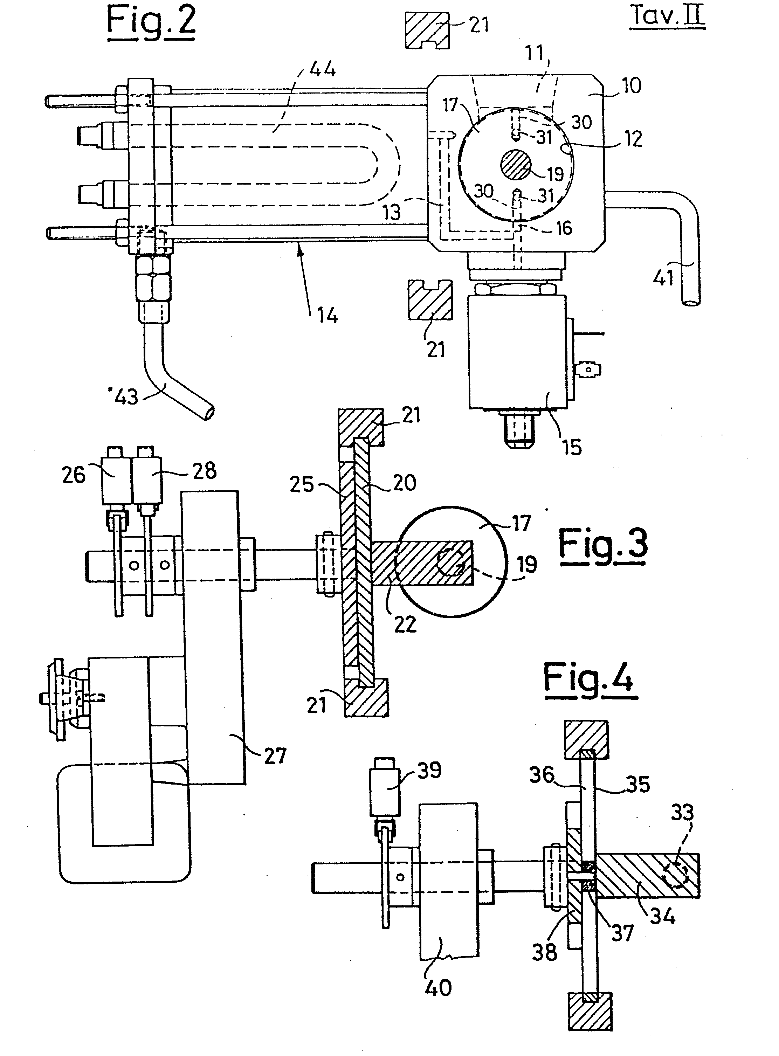

Figures 2, 3 and 4 are sectional views along lines II-II, III-III and IV-IV of Figure 1, respectively.

The apparatus forming the subject of the invention comprises, first of all, a central body 10 having an upper opening 11 and a horizontal cylindrical through hole 12.

Also formed in the body 10 is a channel 13 which communicates a heating unit 14 with an electric valve 15, which are, both of them, fixed to the body 10. Extending from the electric valve 15 is a further conduit 16 which opens into the hole 12 of the bidy 10.

Two small pistons 17 and 18 are slidable in the hole 12;

the first of them, indicated by reference numeral 17, is moved by a stem 19, rigidly connected to a plate 20, slidable along

0129930

guides 21, fixed to the structure of the apparatus, not shown in its entirely. The stem 19 and the plate 20 are placed in different planes and are rigidly connected by means of an arm 22 orthogonal to the respective planes. Plate 20 has a vertical slot 23 within which a dog 24, rigidly connected to a disc 25, is slidable; this latter is made to rotate in both directions about the axis x by means of motors 26 and 28 fixed to the structure of the apparatus 27. Formed in the piston 17 are three circonferential grooves; inserted into the two outer grooves are gaskets 29 serving to exert a sealing action within the walls of the hole 12, whilst from the intermediate groove 32, having no gaskets, there are radially extending conduits 30 connected to respective axial conduits 31 which open from the piston 17 into the hole 12. The second piston 18, also provided with a sealing gasket 29, within the chamber 12, is pushed by a stem 33 rigidly connected to an arm 34, which, in its turn, is fixed to a plate 35 provided with a vertical slot 36 having slidable therein a dog 37 supported by a disc 38. This latter is made to rotate about the axis y by means of a motor 39 fixed to the structure 40.

Finally, applied onto the piston 18 is a delivery conduit 41 connected to a conduit 42 of the piston, which conduit opens into the chamber 12.

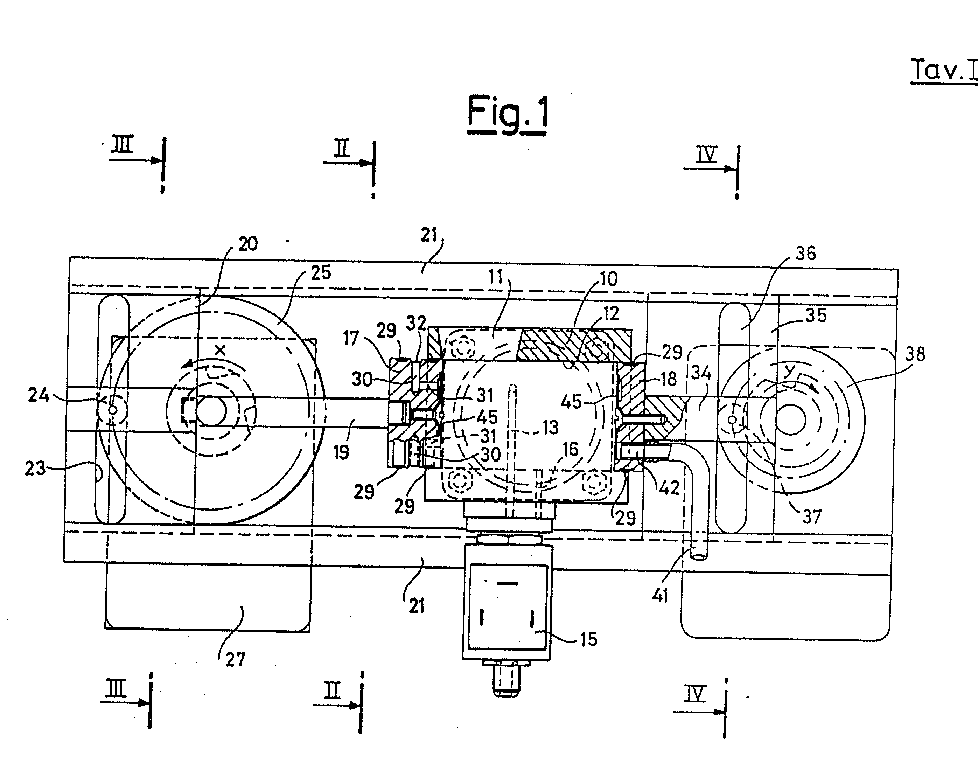

The device operates as follows. Assume that the rest position is that shown in Figure 1, and that the powdered product, such as coffee, is feed through the opening 11 into the chamber 12, in the dose pre-established by known means not shown.

By means of one of the motors 26, 28, the disc 25 is rotated in one direction, so that the dog 24, sliding within the slot 23, drags the plate 20, along the guides 21. Since the plate 20 is rigidly connected to the piston 17, this latter will slide within the chamber 12 and compress the powder against the piston 18 which has remained stationary. At the same time, through a conduit 43, the unit 14 is filled with water, in which unit a resistance 44 heats the water to the required temperature and supplies it, through the conduit 13, to the electric valve 15. At the end of the stroke of the piston 17, which stroke, according to what is represented in Figure 1, corresponds to a rotation of the disc 25 for little more than $90^{\circ}$, the groove 32 of the piston 17 will register with the passage 16, so that the electric valve 15, when actuated, will supply a pre-established dose of water through the channel 16 which distributes it on the groove 32 and from this latter, through the conduits 30 and 31 of the piston 17, within the chamber 12 in order to form the infusion with the powder compressed between the two pistons 17 and 18.

The infusion will then come out from the nozzle 41, by which it will be feed into a glass especially provided to this end, together with other eventual components (sugar, milk, etc.)

supplied from other feeding devices.

At the end of the delivery of the infusion, the motor 39 will rotate the disc 38 in one direction, so that the respective dog 37, sliding along the slot 36, will drag the plate 35 along the guides 21, thus causing the piston 18 to slide out from the chamber 12.

By actuating again the motor 28, to complete the rotation of the disc 25 to $180^{\circ}$ away from the rest position shown in Figure 1, the piston 17 is made to move to the other end of the chamber 12, thereby pushing beyond this latter the disc of powdered product compressed and forming now a compact block, which thus falls out from the chamber 12 to be received in a special container together with the other blocks as they are ejected after each other. Thereafter, the motor 26 is actuated to rotate the disc 25 for further $180^{\circ}$, thereby bringing it back to the rest position, and together therewith the piston 17. The disc 38 also is made to rotate by means the motor 39, whereby the piston 18 is reintroduced again into the chamber 12, as shown in Figure 1. At this moment, the cycle may be repeated for the delivery of a successive beverage.

As can be appreciated, the apparatus bescribed hereinabove is of a very simple conception and is composed of elements which are reliable in the course of the time and do not require any maintenance, since they are not subject to failures and breakings, except in exceptional and unforeseeable cases.

The apparatus can operate with sufficiently rapid and frequent cycles, in relation, especially, to the dimensions and to the capacity of the heating unit 14.

The device ensures also a complete cleaning of the chamber 12, at the end of each cycle, thereby preparing the apparatus for the delivery, at the successive cycle, of a different beverage, with this latter being absolutely free from any taste of the preceding beverage.

Each piston 17 and 18 is provided with filters 45 which ensure that the beverage is delivered without any trace of powders or else.

CLAIMS

I. An automatic distributor for preparing and dispensing beverages formed by infusions of powdered foodstuffs, characterized in comprising a chamber provided with respective openings for feeding the powdered product and the hot infusion water; in the chamber there being slidably arranged two opposed pistons, one of which accomplishes a first section of stroke towards the other piston, maitained stationary, and a second section of stroke to eject the compressed powder through an opening of the chamber, which is set free by moving the other piston away from the first ; there being provided feeding means of introducing the hot water into the chamber at the end of the first section of the stroke of the first piston, discharge conduits for discharging the infusion produced by the passage of the water into the powder, and kinematic means actuated by motor means which produce said translations of the two pistons.

2. A distributor according to Claim 1, characterized in that the kinematic means actuating both pistons are formed by discs, which are rotated by motor means, and provided with peripheral dogs slidable along slots of plates which are, in their turn, slidable along guides of the distributor and to which the said pistons are rigidly connected.

3. A distributor according to Claim 1, characterized in that the hot water is supplied by a heating to the chamber through an electric valve which gives the consent when the first piston has terminated said first section of the stroke.

4. A distributor according to Claim 3 characterized in that the water from the electric valve is supplied to a periferal groove of the piston and is fed from this groove to holes thereof which open into the interior of the chamber where the powder is compressed.

5. A distributor according to Claim 1 characterized in that the infusion outlet is connected to the second piston.

6. A distributor according to Claim 1 characterized in that the opening, through which, after the infusion has been achieved, the powder is ejected by pushing it by the first piston,is set free by moving the second piston till it is extracted from the chamber.

Tav.I

Fig.1

0129930
Tav. II

# Fig.2

# Fig.3

# Fig.4

0129930
Application number

European Patent
Office

EUROPEAN SEARCH REPORT

EP 84 20 0865

# DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | FR-A-2 347 911 (MOSER)<br><br>* the whole document * | 1,3,5,6 | A 47 J 31/40 |
| | --- | | |
| X | US-A-3 064 553 (SIMJIAN)<br>* column 3, lines 1-28; figures 2 and 3 * | 1,3,5 | |
| | --- | | |
| A | FR-A-2 035 398 (CIANETTI)<br>* the whole document * | 1 | |
| | --- | | |
| A | FR-A-2 452 905 (VALENTE ET PILONI)<br>* page 4, lines 1-6; figure 1 * | 4 | |
| | --- | | |
| A | US-A-3 026 790 (ARVAN)<br>* column 3, lines 9-21; figures 1-3 * | 2 | TECHNICAL FIELDS SEARCHED (Int. Cl. ³)<br><br>A 47 J |
| | ----- | | |

The present search report has been drawn up for all claims

| Place of search<br>THE HAGUE | Date of completion of the search<br>27-09-1984 | Examiner<br>SCHARTZ J. |
|---|---|---|